(19) **Europäisches Patentamt**
**European Patent Office**
**Office européen des brevets**

(11) **EP 2 164 163 B1**

(12) **FASCICULE DE BREVET EUROPEEN**

(45) Date de publication et mention
de la délivrance du brevet:
**21.06.2017 Bulletin 2017/25**

(51) Int Cl.:
***H02N 1/00*** *(2006.01)* ***G04C 3/08*** *(2006.01)*
*G04C 3/16* *(2006.01)* *G04C 13/11* *(2006.01)*

(21) Numéro de dépôt: **08164414.8**

(22) Date de dépôt: **16.09.2008**

(54) **Moteur électrostatique comportant un actionneur**

Elektrostatischer Motor, der ein Stellglied umfasst

Electrostatic motor including an actuator

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(43) Date de publication de la demande:
**17.03.2010 Bulletin 2010/11**

(73) Titulaire: **ETA SA Manufacture Horlogère Suisse
2540 Grenchen (CH)**

(72) Inventeur: **Bisig, Martin
4528, Zuchwil (CH)**

(74) Mandataire: **Goulette, Ludivine et al
ICB
Ingénieurs Conseils en Brevets SA
Faubourg de l'Hôpital 3
2001 Neuchâtel (CH)**

(56) Documents cités:
**EP-A- 1 793 208 WO-A-2004/081695
US-A1- 2007 181 411 US-B1- 7 161 518**

Printed by Jouve, 75001 PARIS (FR)

## Description

DOMAINE TECHNIQUE

La présente invention concerne de manière générale un moteur électrostatique destiné à être incorporé notamment dans une pièce d'horlogerie pour en entraîner le mouvement. L'invention concerne plus particulièrement un moteur électrostatique comportant un actionneur électrostatique, par exemple de type à peignes interdigités.

ARRIERE-PLAN TECHNOLOGIQUE

Il est connu dans l'art antérieur, en particulier dans le document WO 2004/081695, incorporé ici par référence, un micromoteur réalisé dans une plaque en silicium. Dans ce document, le moteur est réalisé par gravure dans une couche de silicium. Il comporte une roue d'entraînement dentée et des doigts d'actionnement qui coopèrent avec les dents de la roue pour provoquer sa rotation. Chaque doigt d'actionnement est solidaire en déplacement d'un peigne mobile qui se déplace par rapport à un peigne fixe en fonction d'une tension V.

Les actionneurs à peignes interdigités de ce type sont souvent employés pour un actionnement mécanique basse puissance, tels que les commutateurs optiques, et ils ne sont normalement pas commandés pour une efficacité maximum mais sont plutôt optimisés pour un temps d'actionnement minimum. Dans ce cas, un tel actionneur est alimenté avec beaucoup d'énergie, l'énergie en excès étant éliminée à la fin de la phase d'actionnement. Ce qui est loin d'être optimal en termes d'économie d'énergie.

Dans le cadre de l'intégration d'un tel actionneur dans une pièce d'horlogerie, généralement alimentée par une pile de capacité relativement limitée, la consommation d'énergie par le moteur du mouvement horloger est critique et doit donc être réduite le plus possible.

Le document de brevet US2007/181411 décrit un dispositif MEMS, comme un switch ou un condensateur variable, comportant un actionneur électrostatique. Selon ce document, un problème connu est que, lorsque l'électrode fixe et l'électrode mobile de l'actionneur sont soumises à une différence de potentiel, elles viennent en appui l'une contre l'autre par l'intermédiaire d'un film isolant. Une charge diélectrique se forme alors dans le film isolant. Cette charge est nuisible car elle empêche les électrodes de revenir en position de repos lorsque la différence de potentiel entre les électrodes est ensuite supprimée. Le document de brevet susmentionné propose une solution pour remédier à ce problème.

Le document de brevet US 7,161,518 décrit un procédé de commande d'un dispositif MEMS. Ce procédé comprend les étapes de recevoir un signal modulé en largeur d'impulsion (PWM), commander une source de courant sur la base du signal PWM, et enfin, ajuster la tension au niveau de la cellule MEMS proportionnellement au signal PWM.

Le document de brevet EP 1'793'208 décrit un servomécanisme comportant une actionneur électrostatique comprenant une première structure d'électrode fixe et une seconde structure d'électrode qui est mobile entre une première et une deuxième position, lesdites structures d'électrode ayant une capacité électrostatique variable en fonction de la position de la structure d'électrode mobile. Le servomécanisme comprend encore une source d'alimentation basse tension, une pile par exemple, et un circuit élévateur de tension alimenté par la pile. Le circuit élévateur de tension est connecté pour produire une différence de potentiel entre les deux structures d'électrode, de manière à engendrer une force électrostatique entre la structure d'électrode fixe et la structure d'électrode mobile.

Ce document antérieur enseigne qu'il est possible d'optimiser la consommation du servomécanisme en appliquant entre les structures d'électrode des impulsions ayant la « bonne tension » et « la bonne durée ». Pour ce faire, le servomécanisme comporte encore des moyens de régulations qui sont prévus pour fournir des impulsions de commande de longueurs variables au circuit élévateur de tension. Les moyens de régulations fournissent une impulsion de commande plus longue si l'amplitude du déplacement de la structure mobile est inférieur à une valeur de seuil, et fournissent une impulsion de commande plus courte si l'amplitude du déplacement de la structure mobile est supérieur à ladite valeur de seuil.

Selon ce document, le circuit élévateur de tension et un circuit inductif du type « step-up charger ». Il ne s'agit donc pas d'un générateur de tension prévu pour générer une différence de potentiel déterminée. Dans ce type de circuit, la durée des impulsions de commande influence aussi bien la durée des impulsions fournies en sortie du circuit élévateur de tension, que le comportement de la tension. En particulier, il n'est pas possible de faire varier la tension de sortie indépendamment de la durée des impulsions.

RESUME DE L'INVENTION

Un but de la présente invention est de répondre aux inconvénients mentionnés ci-dessus en fournissant un moteur électrostatique comportant un actionneur électrostatique et dans lequel l'entraînement du moteur est assuré tout en réduisant la consommation d'énergie.

A cet effet, la présente invention concerne un moteur électrostatique comportant un actionneur comprenant une structure d'électrode fixe et une structure d'électrode mobile, la structure d'électrode mobile étant prévue pour se déplacer cycliquement d'une première position, dite position de repos, vers une seconde position, dite position de déplacement complet, sous l'effet d'une force électrostatique s'exerçant entre lesdites structures d'électrode, et pour être ensuite rappelée vers ladite position de repos en l'absence de ladite force électrostatique, ledit moteur comportant encore des moyens de dérivation connectés entre la structure d'électrode fixe et la structure d'électrode mobile et prévus pour décharger cycliquement lesdites structures d'électrode de manière à supprimer ladite force électrostatique une fois que la structure d'électrode mobile a atteint ladite position de déplacement complet, et comportant encore un générateur connecté entre la structure d'électrode fixe et la structure d'électrode mobile et prévu pour charger cycliquement lesdites structures d'électrode en commençant de charger lorsque l'électrode mobile se trouve dans la position de repos, lesdites structures d'électrode ayant une capacité électrostatique qui varie comme une fonction strictement croissante du chemin parcouru par la structure d'électrode mobile depuis la position de repos en direction de la position de déplacement complet ; le moteur étant caractérisé en ce que le générateur est un générateur de tension prévu pour générer une différence de potentiel déterminée, en ce que le générateur est prévu pour arrêter de charger les structures d'électrodes dès que le générateur a fourni à l'actionneur l'énergie électrostatique nécessaire pour accomplir un cycle en actionnant le moteur avec une vitesse suffisante, c'est-à-dire avant que ladite structure d'électrode mobile n'ait atteint la position de déplacement complet.

Un tel moteur électrostatique s'avère plus efficace que les solutions antérieures dans la mesure où il est prévu d'ajuster la durée de l'impulsion générée en fonction de l'énergie électrique nécessaire pour entraîner le moteur, compte tenu de la tension fournie par le générateur.

Selon une variante avantageuse, le générateur de tension comprend des moyens de sélection d'un niveau de tension d'une impulsion parmi au moins deux niveaux et de préférence quatre niveaux de tension déterminés, et des moyens de réglage de la durée d'impulsion à l'intérieur d'une plage de temps prédéfinie associée au niveau de tension sélectionné. Un tel générateur de tension permet par le choix d'un niveau de tension de s'adapter aux conditions extérieures, comme par exemple les conditions de porter d'une montre dans laquelle serait implémenté le moteur électrostatique.

Selon un mode de réalisation avantageux, le moteur électrostatique comporte également des moyens de mesure du déplacement de ladite structure d'électrode mobile et des moyens de régulation prévus pour commander au générateur de tension d'arrêter de charger les structures d'électrodes lorsque la position de la structure d'électrode mobile est proche d'une position optimum dans laquelle l'augmentation de la capacité des structures d'électrode par rapport à la position de repos est égale à $C_{rel} = \sqrt{(C_p + C_{act\_m}) \cdot C_p} - C_p$.

Une telle solution présente le grand avantage d'être un compromis optimisé entre une durée d'impulsion très courte avec une tension élevée, et une durée d'impulsion très longue avec une tension basse. En effet, d'une part, les capacités parasites étant chargées avec de l'énergie fournie par le générateur de tension, plus la tension est faible, plus l'énergie perdue est réduite. D'autre part, plus la durée d'impulsion est longue, plus la charge des capacités de l'actionneur est importante. Il est donc également important de maintenir une durée d'impulsion aussi courte que possible pour réduire au minimum les pertes électrostatiques sur les capacités de l'actionneur. La solution réside donc dans un compromis consistant à avoir la tension la plus faible possible pour une durée optimisée d'impulsion à appliquer pour un rapport donné de la capacité parasite par rapport à la capacité active.

Selon un mode de réalisation avantageux, les structures d'électrode de l'actionneur sont chargées par une pompe à charge connectée à des bornes d'alimentation de l'actionneur, la pompe à charge étant déconnectée lorsque la capacité instantanée optimale est atteinte. Cette solution assure que l'énergie dépensée inutilement en dehors des phases d'actionnement du moteur est minimale.

Selon un mode de réalisation avantageux, l'actionneur électrostatique est un actionneur à peignes interdigités.

BREVE DESCRIPTION DES FIGURES

D'autres caractéristiques et avantages de la présente invention apparaîtront plus clairement à la lecture de la description détaillée qui suit de modes de réalisation de l'invention donnés à titre d'exemples nullement limitatifs et illustrés par les dessins annexés, dans lesquels :

- la figure 1 représente un schéma bloc d'une pièce d'horlogerie comportant un moteur électrostatique selon un mode de réalisation de la présente invention;
- la figure 2 est une vue de dessus simplifiée d'un actionneur à peignes interdigités qui forme un des constituant d'un moteur électrostatique conforme à un mode de réalisation particulier de la présente invention ;
- la figure 3 est une vue schématique en coupe de l'actionneur à peignes interdigités de la figure 2 ;
- la figure 4 est graphique montrant l'énergie électrostatique contenue dans les structures d'électrodes de l'actionneur des figures 2 et 3 en fonction de la position de la structure d'électrode mobile.

DESCRIPTION DETAILLEE DE L'INVENTION

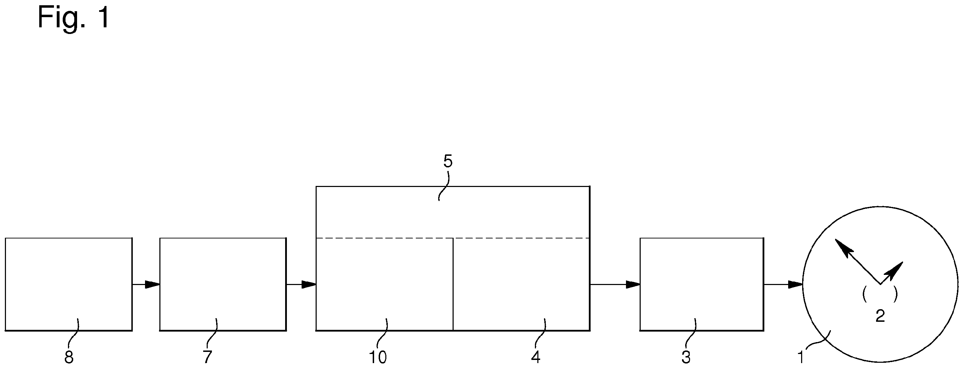

L'invention sera décrite ci-après uniquement à titre d'exemple non limitatifs en relation avec les figures 1 à 4.

Sur la figure 1, une pièce d'horlogerie est représentée sous la forme d'un schéma bloc représentant en particulier les éléments en rapport avec la présente invention. Cette pièce d'horlogerie comprend un cadran 1 muni d'aiguilles 2 indiquant une information horaire. Les aiguilles sont entraînées par un jeu de rouages 3 engrenant avec une interface mécanique 4 d'un moteur électrostatique 5. Le moteur est actionné par le biais d'un actionneur électrostatique 10. L'actionneur est alimenté par des impulsions électriques qui, dans le présent exemple, sont obtenues au moyen d'une pompe à charge 8 commandée par des moyens électroniques 7. De manière avantageuse, les éléments 4, 5, 7, 8 et 10 représentés à la figure 1 sont intégrés.

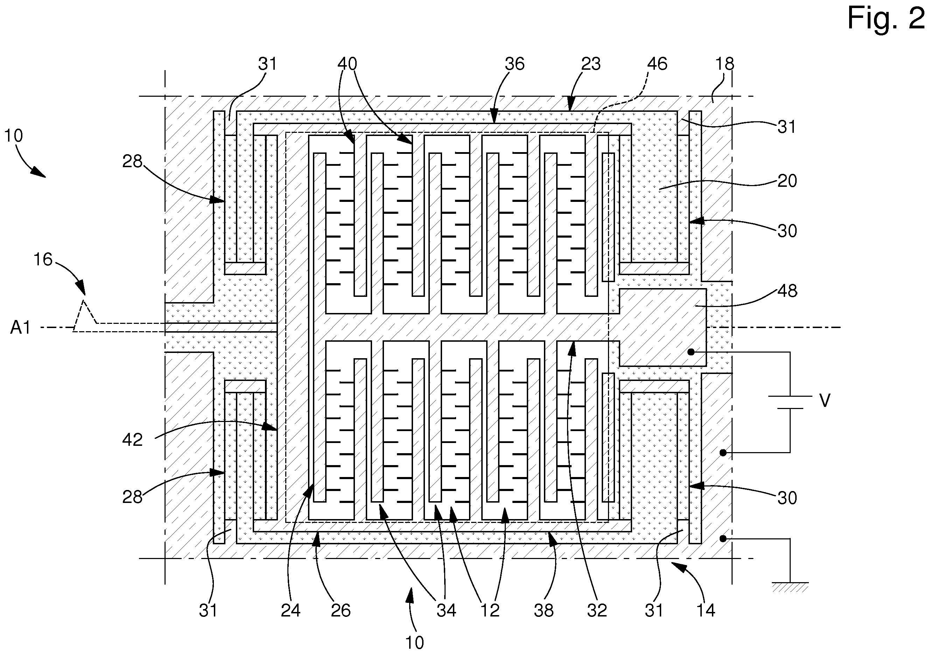

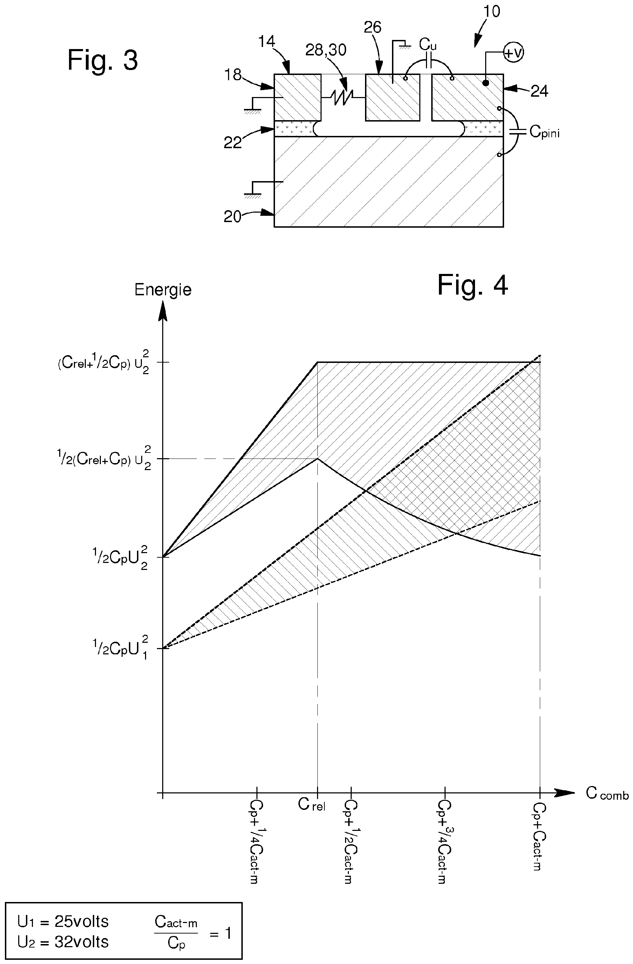

Sur les figures 2 et 3, on a représenté à titre d'exemple un mode de réalisation particulier d'un actionneur électrostatique 10 à peignes interdigités 12 susceptible d'entraîner le moteur électrostatique 5 de la figure 1. L'actionneur 10 est réalisé par gravure dans une plaque 14 en matériau cristallin ou amorphe, tel qu'une plaque de silicium. De préférence, cet actionneur 10 est prévu pour entraîner en rotation un rotor denté (non représenté), au moyen d'un cliquet 16 qui est mobile suivant une direction longitudinale A1, dans le but de constituer un micromoteur du type MEMS (Micro ElectroMechanical System).

Dans le présent exemple, la plaque 14 est du type Silicon On Insulator (SOI) et comprend un substrat épais de en silicium 20, une couche intermédiaire 22 d'oxyde de silicium isolant, et une couche supérieure 18 en silicium d'épaisseur inférieure au substrat 20.

L'actionneur 10 occupe ici une surface globalement rectangulaire sur la plaque 14. Il s'étend dans un logement 23 globalement rectangulaire qui est creusé dans la couche supérieure 18 et dans la couche intermédiaire 22. Il comporte, dans la couche supérieure 18, un premier cadre, appelé structure d'électrode fixe, 24 et un second cadre, appelé structure d'électrode mobile, 26 qui se déplace suivant une direction longitudinale A1 parallèle au plan du substrat 20. La structure d'électrode mobile 26 est rappelée vers une position de repos par deux éléments élastiques de rappel 28 à l'avant et par deux éléments élastiques de rappel 30 à l'arrière constitués par des poutres flexibles reliant la structure d'électrode mobile 26 à des ancrages fixes 31 sur le substrat 20. Ces ancrages fixes 31 sont réalisés dans la couche supérieure 18 et sont liés électriquement à la portion de couche supérieure 18 agencée autour du logement 23.

Le déplacement de la structure d'électrode mobile 26 est provoqué par une différence de potentiel appliquée entre la structure d'électrode fixe 24 et la structure d'électrode mobile 26. Selon l'exemple représenté, la structure d'électrode fixe 24 est placée à un potentiel V alors que la structure d'électrode mobile 26 est liée au reste de la plaque 14 qui est placée à la masse.

On peut voir encore que la structure d'électrode fixe 24 comporte un tronc central 32 qui s'étend longitudinalement au centre de l'actionneur 10, et des branches transversales 34 qui s'étendent latéralement de part et d'autre du tronc central 32. Les branches transversales 34 peuvent aussi être désignées sous l'appellation "peignes transversaux" par l'homme du métier. La structure d'électrode mobile 26 comporte deux troncs latéraux longitudinaux 36, 38, agencés de part et d'autre du tronc central 32, et des branches transversales 40 qui s'étendent vers le tronc central 32, entre les branches transversales 34 de la structure d'électrode fixe 24. Les deux troncs latéraux 36, 38 sont reliés à l'avant, c'est-à-dire à gauche sur la figure 2, par une traverse 42 qui porte à l'avant le cliquet 16.

Les peignes interdigités 12 sont respectivement agencés sur les branches transversales 34, 40.

Pour produire une tension déterminée $U_D$ entre la structure d'électrode fixe et la structure d'électrode mobile, la pompe à charge 8 (figure 1) doit fournir à l'actionneur 10 une charge égale à $C_{Comb} \cdot U_D$ (où $C_{Comb}$ est la capacité de l'actionneur). L'énergie électrostatique contenue dans l'actionneur chargé est alors égale à :

$$E_{Electrostatique} = \frac{1}{2} C_{Comb} \bullet U_D^2.$$

La tension U entre les deux structures d'électrode est associée à une force électrostatique qui a pour effet de faire se déplacer la structure d'électrode mobile à partir de la position de repos en direction de la position de déplacement complet. D'autre part, on a vu que la capacité des structures d'électrode se comporte comme une fonction strictement croissante du chemin parcouru par l'électrode mobile. La capacité est donc minimum dans la position de repos et maximum dans la position de déplacement complet. La capacité minimum est appelée la capacité parasite ($C_P$). L'augmentation de la capacité lorsque la structure d'électrode mobile se déplace depuis la position de repos jusqu'à la position de déplacement complet est appelée la capacité active maximum ($C_{act\_m}$). On comprendra donc que la capacité totale de l'actionneur en position de déplacement complet est égale à $C_P + C_{act\_m}$.

La figure 4 est graphique de l'énergie totale fournie par le générateur de tension à l'actionneur au cours d'un cycle. La courbe en trait interrompu épais correspond à l'énergie fournie conformément à un procédé de commande de l'art antérieur. Selon ce procédé, on connecte le générateur de tension à l'actionneur lorsque la structure d'électrode mobile est dans sa position de repos. La charge électrique fournie à l'actionneur provoque le déplacement de la structure d'électrode mobile en direction de sa position de déplacement complet. Lorsque la structure mobile atteint la position de déplacement complet, on déconnecte l'actionneur du générateur de tension et, quasi simultanément, on connecte les moyens de dérivation de manière à décharger l'actionneur et à faire retomber la tension entre la structure d'électrode fixe et la structure d'électrode mobile à zéro.

On a vu plus haut que la capacité de l'actionneur se comporte comme une fonction strictement croissante du déplacement de la structure d'électrode mobile depuis sa position de repos. C'est la raison pour laquelle le graphique de la figure 4 utilise la capacité de l'actionneur $C_{comb}$ comme abscisse au lieu d'utiliser expressément la position de la structure d'électrode mobile. On notera que les axes du graphique se coupent en un point d'abscisse $C_p$; $C_p$ étant la capacité de l'actionneur lorsque la structure d'électrode mobile occupe la position de repos. La position de déplacement complet, quant à elle, est indiquée par le point d'abscisse correspondant à la capacité $C_p + C_{act\_m}$. Précisons encore que, dans l'exemple représenté à la figure 4, on a supposé d'une part que le rapport des capacités $C_p/C_{act\_m}$ est égal à 1, et d'autre part que la valeur de la tension $U_1$ fournie par le générateur est de 25 volts.

La courbe en trait interrompu fin, qui s'étend au dessous de la courbe en trait interrompu épais, correspond à l'énergie électrostatique emmagasinée dans la capacité de l'actionneur. On voit que lorsque la structure d'électrode mobile se trouve en position de repos, l'énergie électrostatique emmagasinée dans l'actionneur correspond à l'énergie fournie par le générateur de tension. En d'autres termes, en position de repos, toute l'énergie fournie sert à charger la capacité parasite. En revanche, lorsque la structure d'électrode mobile se trouve en position de déplacement complet, la capacité de l'actionneur vaut le double de la capacité parasite et l'énergie électrostatique emmagasinée vaut aussi le double. On remarquera toutefois que le trait interrompu épais qui correspond à l'énergie totale fournie par le générateur passe bien au dessus du trait interrompu fin. On comprendra que l'espace hachuré compris entre le trait interrompu épais et le trait interrompu fin correspond à la part de l'énergie fournie par le générateur qui a est transformée en énergie mécanique. Le graphique permet d'observer qu'à la fin d'un cycle, dans le présent exemple, exactement un tiers de l'énergie fournie est transformée en énergie mécanique. Les deux autres tiers sont perdus lorsque la tension entre les deux structures d'électrode est ramenée à zéro par les moyens de dérivation.

La courbe en trait continu épais correspond à l'énergie fournie conformément à un mode de réalisation de la présente invention. Selon ce mode de réalisation, on connecte comme précédemment le générateur de tension à l'actionneur lorsque la structure d'électrode mobile est dans sa position de repos. Toutefois, conformément à la présente invention, on déconnecte l'actionneur du générateur de tension bien avant que la structure d'électrode mobile n'ait atteint la position de déplacement complet. Une fois l'actionneur déconnecté du générateur de tension, on maintient constante la charge de l'actionneur jusqu'à ce que la structure d'électrode mobile ait atteint la position de déplacement complet. Ce n'est qu'une fois la position de déplacement complet atteinte, que la tension entre les structures d'électrode est ramenée à zéro par les moyens de dérivation. Dans l'exemple représenté, on a supposé que la tension $U_2$ fournie par le générateur était de 32 volts.

Le graphique de la figure 4 montre qu'à la fin d'un cycle, avec les valeurs choisies pour cet exemple, l'énergie totale fournie par le générateur est pratiquement la même avec la tension $U_2$ qu'avec la tension $U_1$.

Toutefois, la forme des deux courbes est très différente. En effet, la courbe en trait continu s'élève rapidement pour atteindre un plateau lorsque le générateur de tension est déconnecté, alors que la courbe en trait interrompu garde la même pente jusqu'à la fin du cycle. La courbe en trait fin continu correspond à l'énergie électrostatique emmagasinée dans la capacité de l'actionneur. Comme précédemment, on voit que lorsque la structure d'électrode mobile se trouve en position de repos, l'énergie électrostatique emmagasinée dans l'actionneur correspond à l'énergie fournie par le générateur de tension. Lorsque la structure d'électrode mobile se déplace jusqu'à la positon $C_{rel}$ où a lieu la déconnection du générateur, l'énergie électrostatique emmagasinée dans l'actionneur augment proportionnellement à la capacité de ce dernier. Toutefois, sur le même trajet, l'énergie totale fournie par le générateur augment encore bien plus vite, et l'espace hachuré compris entre le trait épais continu et le trait fin continu correspond à la part de l'énergie fournie par le générateur qui a été transformée en énergie mécanique.

Comme le montre le graphique de la figure 4, une fois que l'actionneur et le générateur de tension ont été déconnectés, l'énergie électrostatique contenue dans l'actionneur décroît progressivement. Cette diminution est la conséquence directe du fait que la charge est maintenue constante alors que la capacité de l'actionneur augmente régulièrement. On comprendra que l'énergie électrostatique ainsi perdue par l'actionneur est transformée en énergie mécanique. Le graphique permet d'observer que, dans le présent exemple, pratiquement 45% de l'énergie fournie par le générateur de tension est transformée en énergie mécanique. Les 55 autres pourcents sont perdus lorsque la tension entre les deux structures d'électrode est ramenée à zéro par les moyens de dérivation.

Le graphique de la figure 4 permet de comprendre pourquoi le rendement énergétique d'un moteur électrostatique selon la présente invention est meilleur que celui des moteurs électrostatiques de l'art antérieur. La demanderesse à vérifié aussi bien par calculs qu'empiriquement que, du point de vue du rendement, la position optimale de la structure d'électrode mobile à laquelle déconnecté la pompe à charge est la position pour laquelle l'augmentation de la capacité de l'actionneur depuis la position de repos est

$$C_{rel} = \sqrt{\left(C_p + C_{act\_m}\right) \cdot C_p} - C_p$$

. Bien sûr, on comprendra que cette position n'est optimale que pour autant que la tension de la pompe à charge soit suffisante pour permettre de fournir toute l'énergie électrostatique nécessaire durant le temps de connexion écourté de la pompe à charge.

Selon un mode de réalisation particulièrement simple de la présente invention, le moteur électrostatique comporte des moyens de commande qui sont prévus pour connecter cycliquement la pompe à charge à l'actionneur de manière à fournir lors de chaque cycle la même impulsion. La durée prédéterminée de cette impulsion est basée sur une estimation du temps pris par la structure d'électrode mobile pour se déplacer de la position de repos à la position optimum. D'autre part, la tension constante fournie par la pompe à charge est déterminée de manière à ce que chaque impulsion puisse fournir l'énergie électrostatique nécessaire pour faire accomplir un cycle à l'actionneur avec une vitesse suffisante. Précisons que la détermination de la tension est de préférence faite avec une certaine marge, de manière à ce qu'une petite quantité additionnelle d'énergie soit disponible pour faire face d'éventuelles fluctuations dans le couple résistant qui s'oppose à la marche du moteur.

Comme on l'a vu, dans le présent exemple, le moteur électrostatique de l'invention est prévu pour entraîner les organes d'affichage d'une montre analogique. Une caractéristique d'une telle application est que les sollicitations du moteur électrostatique sont susceptibles de fluctuer considérablement selon les conditions de porter de la montre. D'autre part, de manière générale, on peut s'attendre à ce que l'efficacité du système mécanique reliant l'actionneur aux organes d'affichage se détériore graduellement avec le vieillissement de la montre. A fin d'éviter que ces variations, ne compromettent le bon fonctionnement de la montre, un mode de réalisation avantageux de l'invention prévoit que la détermination de la tension et de la durée des impulsions fournies par la pompe à charge est réalisée à l'aide d'au moins une boucle de régulation. Cette boucle de régulation comporte des moyens de mesure du déplacement de la structure d'électrode mobile. Dans le présent exemple, ces moyens de mesure du déplacement sont même doubles. En effet, le moteur comporte d'une part des moyens de mesure de position qui sont prévus pour mesurer la capacité de l'actionneur ou, autrement dit, la position de l'électrode mobile à un instant donné, et d'autre part des moyens de mesure du courant fourni par la pompe à charge, qui sont utilisés comme moyen de mesure de la vitesse instantanée de la structure d'électrode mobile.

Dans le présente exemple, les moyens de mesure de position comprennent d'une part un condensateur de capacité connue $C_A$, qui est connecté en série avec la capacité $C_{comb}$ constituée par les deux structures d'électrode, et d'autre part des moyens pour évaluer la tension $U_A$ entre les deux bornes du condensateur de capacité $C_A$. La capacité $C_{comb}$ des structures d'électrode à un instant donné est reliée au rapport entre la tension déterminée $U_D$ fournie par la pompe à charge et la tension $U_A$ aux bornes de la capacité par la relation suivante :

$$\frac{1}{C_{Comb}} = \frac{1}{C_A} \bullet \left( \frac{U_D}{U_A} - 1 \right)$$

Si la capacité $C_A$ est choisie suffisamment grande relativement à la capacité $C_{Comb}$ des structures d'électrode, la tension entre les deux structures d'électrode est pratiquement égale à la tension $U_D$ fournie par la pompe à charge. Dans ces conditions :

$$C_{Comb} \approx C_A \bullet \frac{U_A}{U_D}$$

Alternativement, les moyens de mesure de position pourraient comporter trois condensateurs et être conformes à ceux qui sont décrits dans le document de brevet EP 1'793'208.

Quant aux moyens de mesure de vitesse, dans le présent exemple, ils comprennent un détecteur de courant connecté entre la pompe à charge et l'une des deux structures d'électrodes de l'actionneur, de manière à mesurer la vitesse d'accroissement de la charge de l'actionneur. Comme la charge de l'actionneur est proportionnelle à la capacité, l'intensité du courant est proportionnelle à la vitesse d'accroissement de la capacité, ou plus précisément :

$$i(t) = U_D \bullet \frac{dC_{Comb}(t)}{dt}$$

Dans le mode de réalisation qui fait l'objet du présent exemple, la tension déterminée $U_D$ fournie par la pompe à charge peut être commutée entre quatre valeurs différentes. Par exemple 28, 40, 55 et 80 volts. Grâce à cette caractéristique, il est possible de commuter la tension fournie par la pompe à charge sur une valeur plus élevée lorsque les moyens de mesure de position indiquent que l'actionneur n'a pas assez d'énergie pour accomplir un cycle. A titre d'exemple, on peut prévoir que les moyens de mesure de position contrôlent, qu'à la fin de son cycle de déplacement, la structure d'électrode mobile a bien atteint la position de déplacement complet. Ce contrôle peut se faire par exemple en vérifiant que la capacité $C_{Comb}$ de l'actionneur a bien atteint la valeur $C_P + C_{act\_m}$ juste avant que les structures d'électrodes ne soient déchargées par les moyens de dérivation connectés entre celles-ci.

Comme on l'a vu, dans le présent exemple, les moyens de mesure du déplacement comprennent non seulement des moyens de mesure de la position, mais également des moyens de mesure de la vitesse de la structure d'électrode mobile. Ainsi, selon le présent exemple, les moyens de mesure du déplacement sont également prévus pour vérifier en temps réel que l'énergie fournie à l'actionneur est suffisante pour qu'il entraîne le moteur avec une vitesse suffisante. A cet effet, dans le présent exemple, les moyens de mesure de la vitesse sont arrangés pour mesurer la vitesse de la structure d'électrode mobile durant la phase pendant laquelle la pompe à charge est connectée à l'actionneur. Lorsque le courant mesuré par les moyens de mesure de vitesse correspond à une vitesse inférieure à une première valeur seuil, les moyens de régulations sont prévus pour prolonger le temps de connexion de la pompe à charge avec l'actionneur, au-delà du temps normalement nécessaire à la structure d'électrode mobile pour atteindre la position optimum.

D'autre part, les moyens de mesure de vitesse sont également prévus pour réduire la quantité d'énergie fournie à l'actionneur lorsque cette quantité est inutilement élevée compte tenu du couple à fournir en sortie par le moteur électrostatique. Ainsi lorsque le courant mesuré par les moyens de mesure de vitesse correspond à une vitesse supérieure à une deuxième valeur seuil, les moyens de régulations sont prévus pour réagir en commutant la tension fournie par la pompe à charge sur une valeur moins élevée.

L'homme du métier comprendra que les moyens de mesure du déplacement n'ont absolument pas besoin d'être doubles. En effet, selon une première variante, ces moyens pourraient se limiter à des moyens de mesure de position, alors que selon une seconde variante, ces moyens pourraient au contraire se limiter à des moyens de mesure de la vitesse. On comprendra d'autre part que diverses modifications et / ou améliorations évidentes pour l'homme du métier peuvent être apportées aux différentes modes de réalisation de l'invention décrits dans la présente description sans sortir du cadre de l'invention définie par les revendications annexées.

## Revendications

1. Moteur électrostatique (5) comportant un actionneur (10) comprenant une structure d'électrode fixe (24) et une structure d'électrode mobile (26), la structure d'électrode mobile étant prévue pour se déplacer cycliquement d'une première position, dite position de repos, vers une seconde position, dite position de déplacement complet, sous l'effet d'une force électrostatique s'exerçant entre lesdites structures d'électrode (24, 26), et pour être ensuite rappelée vers ladite position de repos en l'absence de ladite force électrostatique, ledit moteur (5) comportant encore des moyens de dérivation connectés entre la structure d'électrode fixe (24) et la structure d'électrode mobile (26) et prévus pour décharger cycliquement lesdites structures d'électrode de manière à supprimer ladite force électrostatique une fois que la structure d'électrode mobile (26) a atteint ladite position de déplacement complet, comportant encore un générateur (8) connecté entre la structure d'électrode fixe (24) et la structure d'électrode mobile (26) et prévu pour charger cycliquement lesdites structures d'électrode en commençant de charger lorsque l'électrode mobile (26) se trouve dans la position de repos, et comportant en outre des moyens de régulation (7) pour commander l'alimentation de l'actionneur (10), lesdites structures d'électrode ayant une capacité électrostatique ($C_{comb}$) qui varie comme une fonction strictement croissante du chemin parcouru par la structure d'électrode mobile (26) depuis la position de repos en direction de la position de déplacement complet ; le moteur (5) étant **caractérisé en ce que** le générateur (8) est un générateur de tension prévu pour générer une différence de potentiel déterminée ($U_D$), **en ce que** lesdits moyens de régulation sont prévus pour commander au générateur (8) d'arrêter de charger les structures d'électrodes (24, 26) dès que le générateur a fourni à l'actionneur l'énergie électrostatique nécessaire pour accomplir un cycle en actionnant le moteur (5) avec une vitesse suffisante, c'est à dire d'arrêter de charger lorsque la structure d'électrode mobile (26) se situe approximativement dans une position optimum pour laquelle ladite capacité ($C_{comb}$) des structures d'électrode est égale à

$$C_{rel} = \sqrt{\left(C_p + C_{act\_m}\right) \cdot C_p} - C_p \text{, où}$$

$C_{Comb}$ est la capacité instantanée de l'actionneur,

$C_{rel}$ est la capacité de l'actionneur à la position où a lieu la déconnexion du générateur

$C_p$ est la capacité parasite, ou capacité minimum, à la position de repos,

$C_{act\_m}$ est la capacité active maximum, c'est-à-dire l'augmentation de la capacité lorsque la structure d'électrode mobile se déplace depuis la position de repos jusqu'à la position de déplacement complet,

ladite structure d'électrode mobile (26) atteignant la position optimum avant d'atteindre la position de déplacement complet.

2. Moteur électrostatique selon la revendication 1, **caractérisé en ce qu'**il comporte des moyens de mesure du déplacement de ladite structure d'électrode mobile, **en ce que** le générateur (8) de tension est commutable sélectivement entre une pluralité de tension de sortie ($U_D$) prédéterminées, et **en ce que** lesdits moyens de régulation (7) sont prévus pour commander le générateur (8) de tension de manière à sélectionner une tension de sortie plus élevée lorsque la structure d'électrode mobile (26) n'a pas atteint ladite position de déplacement complet à la fin d'un cycle.

3. Moteur électrostatique selon la revendication 1 ou 2, **caractérisé en ce que** le moyens de mesure du déplacement de ladite structure d'électrode mobile (26) sont prévus pour mesurer la vitesse de la structure d'électrode mobile, **en ce que** lesdits moyens de régulation (7) sont prévus pour commander au générateur (8) de tension de prolonger, au-delà de ladite position optimum, la phase durant laquelle il charge les structures d'électrode (24, 26), si la vitesse mesurée de la structure d'électrode mobile est trop lente, de manière à éviter que le temps nécessaire pour atteindre la position de déplacement complet soit trop long.

4. Moteur électrostatique selon la revendication 1 ou 2, **caractérisé en ce que** le moyens de mesure du déplacement de ladite structure d'électrode mobile (26) sont prévus pour mesurer la position de la structure d'électrode mobile, **en ce que** lesdits moyens de régulation (7) sont prévus pour commander au générateur (8) de tension de prolonger, au-delà de ladite position optimum, la phase durant laquelle il charge les structures d'électrode (24, 26), si la distance entre la position de repos et la position mesurée de la structure d'électrode mobile (26) est inférieure à une valeur de seuil, de manière à éviter que le temps nécessaire pour atteindre la position de déplacement complet soit trop long.

5. Moteur électrostatique selon la revendication 2, **caractérisé en ce que** le générateur (8) de tension est une pompe à charge prévue pour être déconnectée par les moyens de régulations (7) pour interrompre la phase de charge de l'actionneur (10).

6. Moteur électrostatique selon la revendication 2 ou 5, **caractérisé en ce que** la tension ($U_D$) fournie par le générateur (8) de tension est commutable entre au moins deux niveaux de tension.

7. Moteur électrostatique selon l'une des revendications précédentes, **caractérisé en ce que** l'actionneur (10) est un actionneur à peignes interdigités.

8. Montre comprenant un moteur électrostatique selon l'une des revendications précédentes.

**Patentansprüche**

1. Elektrostatischer Motor (5), umfassend einen Aktor (10), der eine feste Elektrodenstruktur (24) und eine bewegliche Elektrodenstruktur (26) aufweist, wobei die bewegliche Elektrodenstruktur dazu vorgesehen ist, sich unter der Wirkung einer zwischen den Elektrodenstrukturen (24, 26) ausgeübten elektrostatischen Kraft zyklisch aus einer ersten Position, der Ruheposition, in eine zweite Position, der Position vollständiger Verschiebung, zu verschieben und anschließend bei Abwesenheit der elektrostatischen Kraft in die Ruheposition zurückgestellt zu werden, wobei der Motor (5) ferner Ableitungsmittel umfasst, die zwischen die feste Elektrodenstruktur (24) und die bewegliche Elektrodenstruktur (26) geschaltet sind und dazu vorgesehen sind, die Elektrodenstrukturen zyklisch zu entladen, derart, dass die elektrostatische Kraft unterdrückt wird, sobald die bewegliche Elektrodenstruktur (26) die Position vollständiger Verschiebung erreicht hat, ferner umfassend einen Generator (8), der zwischen die feste Elektrodenstruktur (24) und die bewegliche Elektrodenstruktur (26) geschaltet ist und dazu vorgesehen ist, die Elektrodenstrukturen zyklisch zu laden, wobei mit dem Laden begonnen wird, wenn sich die bewegliche Elektrode (26) in der Ruheposition befindet, und ferner umfassend Regulierungsmittel (7), um die Versorgung des Aktors (10) zu steuern, wobei die Elektrodenstrukturen eine elektrostatische Kapazität ($C_{comb}$) besitzen, die sich als streng monoton steigende Funktion der Strecke, die von der beweglichen Elektrodenstruktur (26) aus ihrer Ruheposition in Richtung der Position vollständiger Verschiebung zurückgelegt wird, verändert; wobei der Motor (5) **dadurch gekennzeichnet ist, dass** der Generator (8) ein zum Erzeugen einer bestimmten Potentialdifferenz ($U_D$) vorgesehener Spannungsgenerator ist, dass die Regulierungsmittel vorgesehen sind, um den Generator (8) zu steuern, das Laden der Elektrodenstrukturen (24, 26) zu beenden, sobald der Generator dem Aktor die elektrostatische Energie geliefert hat, die erforderlich ist, um einen Zyklus durch Betätigen des Motors (5) mit einer ausreichenden Geschwindigkeit abzuschließen, d. h., um das Laden zu beenden, wenn sich die bewegliche Elektrodenstruktur (26) annähernd in einer optimalen Position befindet, in der die Kapazität ($C_{comb}$) der Elektrodenstrukturen gleich

$$C_{rel} = \sqrt{\left(C_p + C_{act\_m}\right) \cdot C_p} - C_p$$

ist, wobei

$C_{comb}$ die momentane Kapazität des Aktors ist,
$C_{rel}$ die Kapazität des Aktors in der Position ist, in der die Trennung von dem Generator erfolgt,
$C_p$ die Streukapazität oder minimale Kapazität in der Ruheposition ist und
$C_{act\_m}$ die maximale aktive Kapazität ist, d. h. die Erhöhung der Kapazität, wenn sich die mobile Elektrodenstruktur aus der Ruheposition bis in die Position vollständiger Verschiebung verschiebt,
wobei die bewegliche Elektrodenstruktur (26) die optimale Position erreicht, bevor sie die Position vollständiger Verschiebung erreicht.

2. Elektrostatischer Motor nach Anspruch 1, **dadurch gekennzeichnet, dass** er Mittel zum Messen der Verschiebung der beweglichen Elektrodenstruktur umfasst, dass der Spannungsgenerator (8) wahlweise zwischen einer Mehrzahl von vorgegebenen Ausgangsspannungen ($U_D$) umschaltbar ist und dass die Regulierungsmittel (7) dazu vorgesehen sind, den Spannungsgenerator (8) in einer Weise zu steuern, dass eine höhere Ausgangsspannung gewählt wird, wenn die bewegliche Elektrodenstruktur (26) am Ende eines Zyklus die Position vollständiger Verschiebung nicht erreicht hat.

**3.** Elektrostatischer Motor nach Anspruch 1 oder 2, **dadurch gekennzeichnet, dass** die Mittel zum Messen der Verschiebung der beweglichen Elektrodenstruktur (26) dazu vorgesehen sind, die Geschwindigkeit der beweglichen Elektrodenstruktur zu messen, dass die Regulierungsmittel (7) dazu vorgesehen sind, den Spannungsgenerator (8) zu steuern, um die Phase, während der er die Elektrodenstrukturen (24, 26) lädt, über die optimale Position hinaus zu verlängern, falls die gemessene Geschwindigkeit der beweglichen Elektrodenstruktur zu gering ist, um zu vermeiden, dass die zum Erreichen der Position vollständiger Verschiebung erforderliche Zeit zu lang ist.

**4.** Elektrostatischer Motor nach Anspruch 1 oder 2, **dadurch gekennzeichnet, dass** die Mittel zum Messen der Verschiebung der beweglichen Elektrodenstruktur (26) dazu vorgesehen sind, die Position der beweglichen Elektrodenstruktur zu messen, dass die Regulierungsmittel (7) dazu vorgesehen sind, den Spannungsgenerator (8) zu steuern, um die Phase, während der er die Elektrodenstrukturen (24, 26) lädt, über die optimale Position hinaus zu verlängern, falls der Abstand zwischen der Ruheposition und der gemessenen Position der beweglichen Elektrodenstruktur (26) kleiner als ein Schwellenwert ist, um zu vermeiden, dass die zum Erreichen der Position vollständiger Verschiebung erforderliche Zeit zu lang ist.

**5.** Elektrostatischer Motor nach Anspruch 2, **dadurch gekennzeichnet, dass** der Spannungsgenerator (8) eine Ladungspumpe ist, die dazu vorgesehen ist, von den Regulierungsmitteln (7) getrennt zu werden, um die Ladephase des Aktors (10) zu unterbrechen.

**6.** Elektrostatischer Motor nach Anspruch 2 oder 5, **dadurch gekennzeichnet, dass** die Spannung ($U_D$), die von dem Spannungsgenerator (8) geliefert wird, zwischen mindestens zwei Spannungspegeln umschaltbar ist.

**7.** Elektrostatischer Motor nach einem der vorhergehenden Ansprüche, **dadurch gekennzeichnet, dass** der Aktor (10) ein Aktor mit ineinandergreifenden Kämmen ist.

**8.** Uhr, umfassend einen elektrostatischen Motor nach einem der vorhergehenden Ansprüche.

**Claims**

**1.** Electrostatic motor (5) including an actuator (10) comprising a fixed electrode structure (24) and a mobile electrode structure (26), the mobile electrode structure being provided for moving cyclically from a first position, called the rest position, to a second position, called the complete displacement position, under the effect of an electrostatic force exerted between said electrode structures (24, 26), and then returned to said rest position in the absence of said electrostatic force, said motor (5) further including shunt means connected between the fixed electrode structure (24) and the mobile electrode structure (26) for cyclically discharging said electrode structures so as to remove said electrostatic force once the mobile electrode structure (26) has reached said complete movement position, and further including a generator (8) connected between the fixed electrode structure (24) and the mobile electrode structure (26) for cyclically charging said electrode structures by starting to charge when the mobile electrode (26) is in the rest position, and further including regulating means (7) for controlling the powering of the actuator (10), said electrode structures having an electrostatic capacitance ($C_{Comb}$) that varies as a strictly increasing function of the path travelled by the mobile electrode structure (26) from the rest position in the direction of the complete displacement position; the motor (5) being **characterized in that** the generator (8) is a voltage generator for generating a determined potential difference ($U_D$), **in that** said regulating means are provided for making the generator (8) stop charging the electrode structures (24, 26) as soon as the generator has supplied the actuator with the electrostatic energy necessary to complete a cycle while driving the motor (5) at a sufficient speed, i.e. stops charging when the mobile electrode structure (26) is approximately located in an optimum position for which said capacitance ($C_{Comb}$) of the electrode structures is equal to

$$C_{rel} = \sqrt{\left(C_p + C_{act\_m}\right)\cdot C_p} - C_p \text{ , where}$$

$C_{Comb}$ is the instantaneous capacitance of the actuator,
$C_{rel}$ is the actuator capacity in the position where the generator is disconnected,
$C_P$ is the parasitic capacitance, or minimum capacitance, in the rest position,
$C_{act\_m}$ is the maximum active capacitance, i.e. the increase in capacitance when the mobile electrode structure moves from the rest position to the complete displacement position,
said mobile electrode structure (26) reaching the optimum position before reaching the complete displacement position.

2. Electrostatic motor according to claim 1, **characterized in that** it includes means for measuring the displacement of said mobile electrode structure, **in that** the voltage generator (8) can be switched selectively between a plurality of predetermined output voltages ($U_D$), and **in that** said regulating means (7) are provided for controlling the voltage generator (8) such that a higher output voltage is selected when the mobile electrode structure (26) has not reached said complete displacement position at the end of a cycle.

3. Electrostatic motor according to claim 1 or 2, **characterized in that** the displacement measuring means for said mobile electrode structure (26) are provided for measuring the speed of the mobile electrode structure, **in that** said regulating means (7) are provided for making the voltage generator (8) extend, beyond said optimum position, the phase during which the electrode structures (24, 26) are charged, if the measured speed of the mobile electrode structure is too slow, so as to prevent the time necessary to reach the complete displacement position from being too long.

4. Electrostatic motor according to claim 1 or 2, **characterized in that** the displacement measuring means for said mobile electrode structure (26) are provided for measuring the position of the mobile electrode structure, **in that** said regulating means (7) are providing for making the voltage generator (8) extend, beyond said optimum position, the phase during which the electrode structures (24, 26) are charged, if the distance between the rest position and the measured position of the mobile electrode structure (26) is less than a threshold value, so as to prevent the time necessary to reach the complete displacement position from being too long.

5. Electrostatic motor according to claim 2, **characterized in that** the voltage generator (8) is a charge pump that is disconnected by the regulating means (7) to interrupt the charging phase of the actuator (10).

6. Electrostatic motor according to claim 2 or 5, **characterized in that** the voltage ($U_D$) supplied by the voltage generator (8) can be switched between at least four voltage levels.

7. Electrostatic motor according to any of the preceding claims, **characterized in that** the actuator (10) is an interdigited comb actuator.

8. Watch including an electrostatic motor according to any of the preceding claims.

Fig. 1

Fig. 2

EP 2 164 163 B1

## Fig. 3

## Fig. 4

Energie

$(C_{rel}+\frac{1}{2}C_p)\,U_2^2$

$\frac{1}{2}(C_{rel}+C_p)\,U_2^2$

$\frac{1}{2}C_pU_2^2$

$\frac{1}{2}C_pU_1^2$

$C_p+\frac{1}{4}C_{act\text{-}m}$   $C_{rel}$   $C_p+\frac{1}{2}C_{act\text{-}m}$   $C_p+\frac{3}{4}C_{act\text{-}m}$   $C_p+C_{act\text{-}m}$   $C_{comb}$

$U_1 = 25\,volts$   $\dfrac{C_{act\text{-}m}}{C_p} = 1$
$U_2 = 32\,volts$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004081695 A
- US 2007181411 A
- US 7161518 B
- EP 1793208 A